# EUROPEAN PATENT APPLICATION

(11) **EP 3 520 644 A1**
(43) Date of publication of application: **07.08.2019**
(21) Application number: 16917160.0
(22) Date of filing: 29.09.2016
(51) Int. Cl.: A44C 5/00

(54) **INTELLIGENT WRISTBAND**

(71) Applicant: Shenzhen Royole Technologies Co., Ltd., Shenzhen, Guangdong 518172 (CN)
(72) Inventor: ZHANG, Qiang, Shenzhen Guangdong 518052 (CN); WANG, Chaogang, Shenzhen Guangdong 518052 (CN)
(74) Representative: Hamer, Christopher K.
(86) International application number: PCT/CN2016/100732
(87) International publication number: WO 2018/058406

(57) **Abstract**

A smart bracelet includes a protecting housing made from flexible material and including a bending section and a non-bending; a flexible functional module arranged on the bending section; a controlling module electrically connected with the functional module and arranged on the non-bending; and a battery electrically connected with the controlling module and arranged on the non-bending. The smart bracelet of the application may fit the user's wrist.

## Description

### TECHNICAL FIELD

The present disclosure relates to a technical field of smart wearable devices, more particularly to a smart bracelet.

### BACKGROUND

Smart bracelets are wearable smart devices and configured as technology products currently getting the most attention. The smart bracelets having powerful functions are silently infiltrating and changing the lives of people.

Currently, the smart bracelets generally have a fixed shape, and cannot be bent. Thus, the smart bracelets with the fixed shape may not cooperate with different thicknesses wrists, and affect an application range.

### SUMMARY

The technical problem of the present disclosure to be solved is to provide a smart bracelet fit a user's wrist.

In order to achieve the above objectives, the following technical solutions are adopted in the embodiments of the present disclosure:

An embodiment of the present disclosure provides a smart bracelet, including:
a protecting housing made from flexible material and including a bending section and
a non-bending section;
a flexible functional module arranged on the bending section;
a controlling module electrically connected with the functional module and arranged on the non-bending section; and
a battery electrically connected with the controlling module and arranged on the non-bending section.

Compared with the prior art, the present disclosure has the following beneficial effects:
Since the functional module is arranged on the bending section, the controlling module and the battery are arranged on the non-bending section, and a size of the controlling module and the battery is small, a space ratio of the non-bending section to the smart bracelet is much smaller than a space ratio of the bending section to the smart bracelet, thus making a bendable portion of the smart bracelet to be increased. Therefore, the smart bracelet may be bent well during in use to fit the user's wrist and improve the user's experience.

### BRIEF DESCRIPTION OF THE DRAWINGS

In order to more clearly illustrate the technical solution of the present disclosure, the accompanying drawings required for describing the embodiments will be briefly described below. Apparently, the accompanying drawings in the following description are merely the embodiments of the present disclosure, and other drawings may be obtained by those skilled in the art according to these accompanying drawings without paying any creative labor.
FIG. 1 is a structural schematic view of a smart bracelet provided by one exemplary embodiment of the present disclosure.
FIG. 2 is a structural schematic view of a protecting housing of the smart bracelet provided by one exemplary embodiment of the present disclosure.
FIG. 3 is a structural schematic view of a part of elements of the smart bracelet provided by an exemplary embodiment of the present disclosure.
FIG. 4 is an exploded schematic view of the elements of FIG. 3.
FIG. 5 is an enlarged view of the circled portion A of FIG. 3
FIG. 6 is a structural schematic view of a part of elements of a smart bracelet provided by another exemplary embodiment of the present disclosure.
FIG. 7 is a structural schematic view of a protecting housing of the smart bracelet provided by another exemplary embodiment of the present disclosure.
FIG. 8 is another structural schematic view of the smart bracelet provided by an exemplary embodiment of the present disclosure.
FIG. 9 is a stereoscopic structural schematic view of the smart bracelet provided by an exemplary embodiment of the present disclosure.

### DETAILED DESCRIPTION

The technical solutions in the embodiments of the present disclosure are clearly and completely described below with reference to the accompanying drawings in the embodiments of the present disclosure. Apparently, the described embodiments are merely some but not all of the embodiments of the present disclosure. All other embodiments obtained by a person of ordinary skill in the art based on the embodiments of the present disclosure without creative efforts shall fall within the protection scope of the present disclosure.

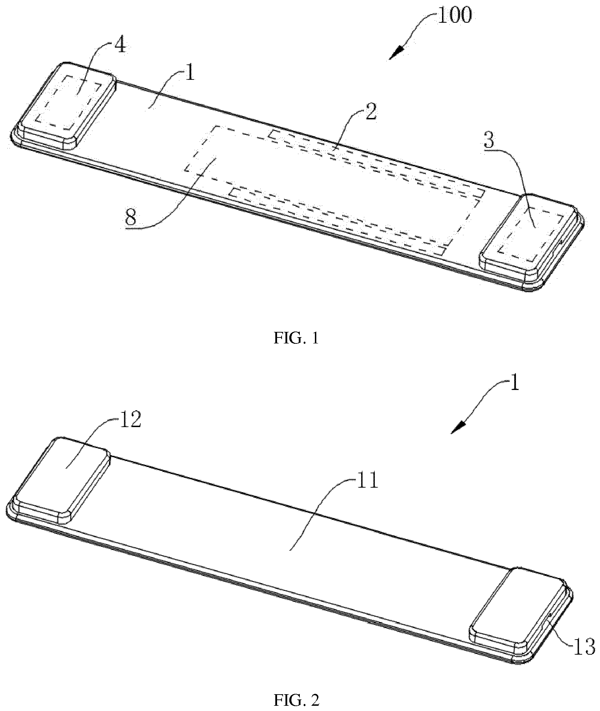

As illustrated in FIG. 1 to FIG. 3, a smart bracelet 100 provided by an exemplary embodiment of the present disclosure, includes a protecting housing 1, a flexible functional module 2, a controlling module 3, and a battery 4. The protecting housing 1 is made from flexible material. The protecting housing 1 includes a bending section 11 and two non-bending sections 12 . The functional module 2 is arranged on the bending section 11, and the functional module 2 may be bent or flattened freely together with the bending section 11. The controlling module 3 is electrically connected with the functional module 2 and arranged at one of the non-bending sections 12. The battery 4 is electrically connected with the controlling module 3 and arranged at the other of the non-bending sections 12. Since the controlling module 3 and the battery 4 are made from hard material, the non-bending sections 12 cannot be bent.

In the embodiment, since the functional module 2 is arranged at the bending section 11, the controlling module 3 and the battery 4 are correspondingly arranged at the two non-bending sections 12, and a size of the controlling module 3 and the battery 4 is small, a space ratio of the two non-bending sections 12 to the smart bracelet 100 is much smaller than a space ratio of the bending section 11 to the smart bracelet 100, thus making a bendable portion of the smart bracelet 100 to be increased. Therefore, the smart bracelet 100 may be bent well during in use to fit the user's wrist and improve the user's experience.

Preferably, the protecting housing 1 is molded in one piece. The functional module 2, the controlling module 3, and the battery 4 are sealed in the protecting housing 1. Since the protecting housing 1 is molded in one piece and integrally packages the functional module 2, the controlling module 3, and the battery 4, the protecting housing 1 may completely seal the above elements, to facilitate a better waterproof effect. It will be appreciated that, since each surface of the functional module 2, the controlling module 3, and the battery 4 is closely contacted to the protecting housing 1, a gap may be avoided and a sealing effect may be optimal.

Preferably, the protecting housing 1 may be made from silicone material. Of course, in other embodiments, the protecting housing 1 may also be made from other sealable and flexible material.

Furthermore, as illustrated in FIG. 1 to FIG. 4, as an alternative exemplary embodiment, the functional module 2 includes a first flexible circuit board 21, a second flexible circuit board 22, a plurality of first light emitting diodes (LEDs) 23, and a plurality of second LEDs 24. The plurality of LEDs 23 are arranged on the first flexible circuit board 21 and electrically connected with the first flexible circuit board 21. The plurality of LEDs 24 are arranged on the second flexible circuit board 22 and electrically connected with the second flexible circuit board 22. The first flexible circuit board 21 and the second flexible circuit board 22 are electrically connected with the controlling module 3.

In the embodiment, the first flexible circuit board 21 and the second flexible circuit board 22 are made from flexible material. Both of the plurality of first LEDs 23 and the plurality of second LEDs 24 are small, thus the functional module 2 may be flexible and bendable.

Preferably, the functional module 2 may display different information by lighting the LEDs (that is, the first LEDs 23 or/and the second LEDs 24) with different numbers or different combinations. For example, the smart bracelet 100 may display the movement of a wearer, such as light one LED after moving 1000 meters, light two LEDs after moving 2000 meters, light one LED after running 500 steps, or light two LEDs after running 1000 steps.

Preferably, both of the first flexible circuit board 21 and the second flexible circuit board 22 are substantially formed in a bar shape.

Preferably, the plurality of first LEDs 23 are arranged at equal intervals in an extending direction of the first flexible circuit board 21. The plurality of second LEDs 24 are arranged at equal intervals in an extending direction of the second flexible circuit board 22.

Preferably, the protecting housing 1 is substantially formed in a bar shape and extends in a first direction. The first flexible circuit board 21 extends in a direction substantially parallel to the first direction. The second flexible circuit board 22 is spaced from the first flexible circuit board 21. The second flexible circuit board 22 may be substantially parallel to the first flexible circuit board 21.

Furthermore, as illustrated in FIG. 1 to FIG. 5, as an alternative exemplary embodiment, the controlling module 3 includes a controlling board 31, a controller 32 formed on the controlling board 31, a sensing assembly 33, and an interface 34. The controller 32 is electrically connected with the functional module 2, the sensing assembly 33, and the interface 34.

In the embodiment, when a user wears the smart bracelet 100, the sensing assembly 33 is configured to detect various motion states of the user and send corresponding data to the controller 32. The controller 32 controls the functional module 2 to display the information according to the data.

Preferably, the sensing assembly 33 includes one or more of a global position system (GPS), a distance sensor, an angle sensor, a gravity sensor, an angular velocity sensor, a speed sensor, an acceleration sensor, and a temperature sensor.

Preferably, the controlling module 3 further includes a switch 35 formed on the controlling board 31. The switch 35 is configured to control the smart bracelet 100 to power on or power off. Since the protecting housing 1 is made from the flexible material and has better flexibility, the user may press the switch 35 on an area of the protecting housing 1 corresponding to the switch 35.

The controlling board 31 may be a printed circuit board (PCB). The controlling board 31 includes a first surface and a second surface opposite to the first surface. The controller 32, the sensing assembly 33, and the interface 34 are all arranged on the first surface, and the switch 35 is arranged on the second surface.

Preferably, the protecting housing 1 defines an opening 13. The opening 13 is aligned with the interface 34 and in air communication with the interface 34 to the outside of the protecting housing 1. The user may charge the battery 4 by the interface 34, and may also be in communication with the controller 32 by the interface 34.

Preferably, the interface 34 may be located at an end or side of one of the non-bending section 12, thus making a depth of the opening 13 aligned with the interface 34 to be small, and thereby making an electrical connection between the interface 34 and the outside to be accomplished easily.

Furthermore, as an alternative exemplary embodiment, the smart bracelet 100 further includes a flexible touching panel 8. The touching panel 8 is arranged on the bending section 11, and the touching panel 8 may be bent or flattened freely together with the bending section 11. The touching panel 8 is electrically connected with the controlling module 3. The touching panel 8 is configured to receive the user's touch information and send the touch information to the controlling module 3. The controlling module 3 controls the smart bracelet 100 according to the touch information.

For example, a working mode of the smart bracelet 100 may be switched by performing a corresponding gesture on the touching panel 8, such as switching from a running measurement mode to a climbing measurement mode or a swimming measurement mode. Of course, the flexible touching panel 8 may also be configured to control the restoration of the smart wristband 100 and the like.

Preferably, the touching panel 8 is sealed in the protecting housing 1.

It will be appreciated that, the functional module 2 may only include the first LEDs 23 and/or the second LEDs 24, or may only include the touching panel 8, or may further include an OLED (Organic Light-Emitting Diode) flexible display and the like, as long as the element can provide an desired function for the user.

Preferably, the smart bracelet 100 further includes a communication module, and the communication module is electrically connected with the controller 32 for sending a signal. The user sends the data obtained by the sensing assembly 33 or the touch information of the touching panel 8 to other terminal devices in real time by the communication module. The terminal device includes, but is not limited to, a mobile phone, a smart backpack, a smart table lamp, a home appliance, and the like. For example, the touch action on the touching panel 8 controls the brightness of the smart table lamp, the volume of the mobile phone, and the like.

Preferably, the first flexible circuit board 21 and the second flexible circuit board 22 are correspondingly located on two sides of the touching panel 8.

Preferably, the first flexible circuit board 21 is adjacent to the touching panel 8. For example, the touching panel 8 is substantially rectangular, and the first flexible circuit board 21 and the second flexible circuit board 22 are correspondingly adjacent to two long sides of the touching panel 8.

The first flexible circuit board 21 may be partially overlapped with the touching panel 8.

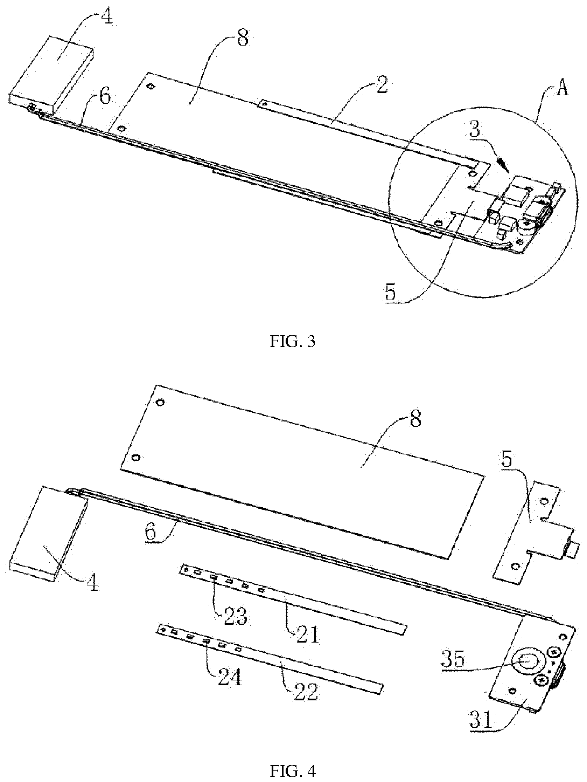

Furthermore, as illustrated in FIG. 3 to FIG. 5, as an alternative exemplary embodiment, the smart bracelet 100 further includes a third flexible circuit board 5. The third flexible circuit board 5 is packaged by the protecting housing 1 and configured to connect with the functional module 2 and the controlling module 3. The third flexible circuit board 5 may also be connected with the touching panel 8 and the controlling module 3.

Preferably, the battery 4 is connected with the controlling module 3 by a wire 6. The wire 6 is parallel to the first flexible circuit board 21, and a length of the wire 6 is substantially greater than a length of the first flexible circuit board 21.

As illustrated in FIG. 1 to FIG. 5, the battery 4 and the controlling module 3 of the smart wristband 100 provided in one embodiment of the present disclosure are correspondingly located on two opposite sides of the functional module 2. The wire 6 may bypass the functional module 2 and be connected with the battery 4 and the controlling board 31. At this time, the non-bending sections 12 are correspondingly formed on two ends of the bending section 11.

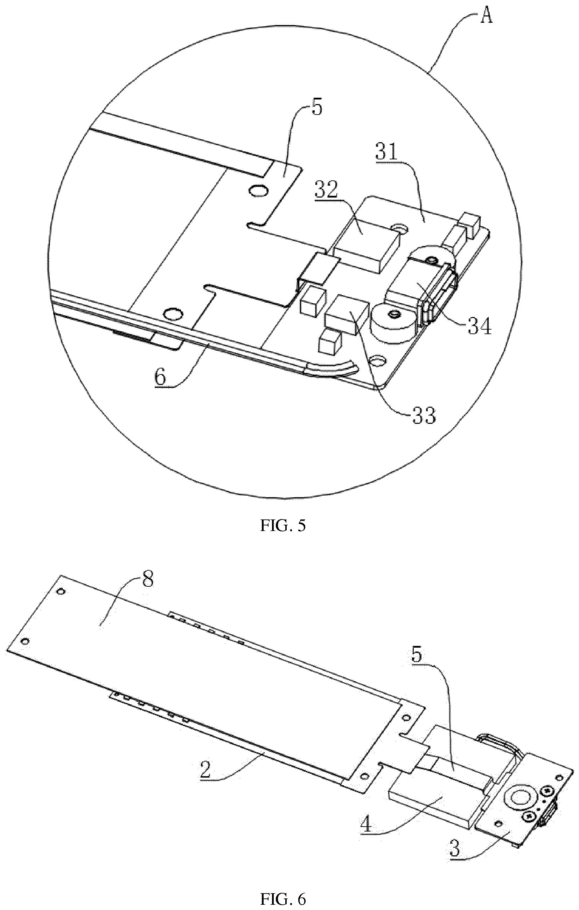

As illustrated in FIG. 6 to FIG. 7, a battery 4 of a smart wristband 100provided in a second embodiment of the present disclosure is located between the functional module 2 and the controlling module 3. The third flexible circuit board 5 may bypass a bottom portion of the battery 4 and may be connected with the controlling module 3. For example the third flexible circuit board 5 is connected with the controlling board 31. At this time, the non-bending section 12 is formed on one end of the bending section 11.

Preferably, the protecting housing 1 further comprises a transition section 14. The transition section 14 is connected between the bending section 11 and the non-bending section 12. The transition section 14 is configured to smoothly connect between an outside surface of the bending section 11 and an outside surface of the non-bending section 12. Since a thickness of the battery 4 and the controlling module 3 is greater than a thickness of the functional module 2 and the touching panel 8, a thickness of the non-bending section 12 is greater than a thickness of the bending section 11. The transition section 14 is set to make the smart wristband 100 more beautiful, and prevent the protecting housing 1 with protruding edges from affecting the wearing comfort.

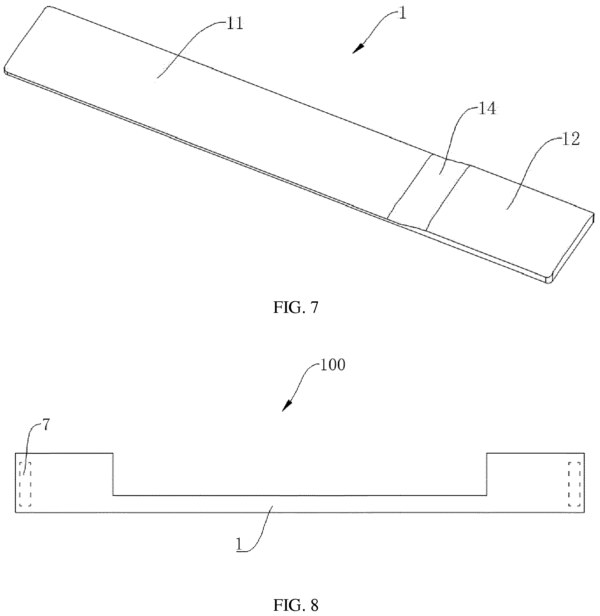

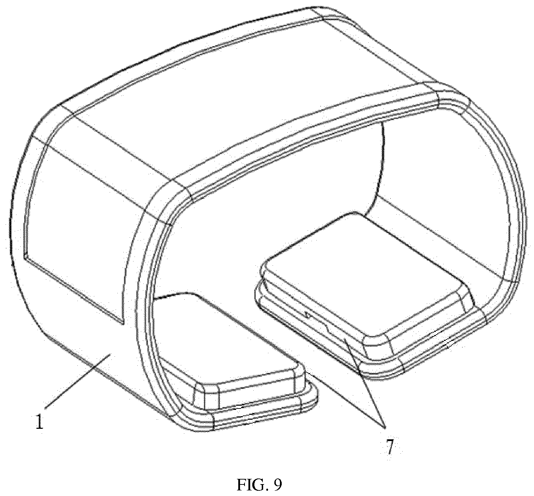

The transition section 14 includes an inclined plane or an arc surface to achieve different thickness transitions. Furthermore, as illustrated in FIG. 8 and FIG. 9, as an alternative exemplary embodiment, a smart bracelet 100further includes two magnets 7. The two magnets 7 are correspondingly arranged on two ends of the protecting housing 1. The two magnets 7 are configured to attract each other when the smart wristband 100 is bent, thus the smart bracelet 100 falling off from the user's wrist may be avoided.

The embodiments of the present disclosure have been described in detail above, and the specific principles of the present disclosure and the implementation manners have been described in specific examples. The above embodiments are only used to help understand the method of the present disclosure and its core ideas. At the same time, persons of ordinary skill in the art, based on the idea of the present disclosure, will have changes in specific implementation manners and application ranges. In summary, the contents of the present specification should not be construed as limiting the present disclosure.

## Claims

1. A smart bracelet, comprising:
a protecting housing made from flexible material and comprising a bending section and a non-bending section;
a flexible functional module arranged on the bending section;
a controlling module electrically connected with the functional module and arranged on the non-bending section; and
a battery electrically connected with the controlling module and arranged on the non-bending section.

2. The smart bracelet of the claim 1, wherein the protecting housing is molded in one piece, and the functional module, the controlling module, and the battery are sealed in the protecting housing.

3. The smart bracelet of the claim 1, wherein the protecting housing is made from silicone material.

4. The smart bracelet of the claim 1, wherein the functional module comprises a first flexible circuit board and a plurality of first light emitting diodes arranged on the first flexible circuit board, and the first flexible circuit board is electrically connected with the controlling module.

5. The smart bracelet of the claim 4, wherein the protecting housing is substantially formed in a bar shape and extends in a first direction, and the first flexible circuit board is substantially formed in a bar shape and extends in a direction parallel to the first direction.

6. The smart bracelet of the claim 5, wherein the functional module further comprises a second flexible circuit board and a plurality of second light emitting diodes arranged on the second flexible circuit board, the second flexible circuit board is electrically connected with the controlling module, and the second flexible circuit board and the first flexible circuit board are arranged at intervals.

7. The smart bracelet of any one of the claims 1-6, wherein the controlling module comprises a controlling board and a controller formed on the controlling board, and the controller is electrically connected with the functional module.

8. The smart bracelet of the claim 7, wherein the controlling module further comprises a switch formed on the controlling board, and the switch is operated to control the smart bracelet to power on and power off.

9. The smart bracelet of the claim 8, wherein the controlling board comprises a first surface and a second surface opposite to the first surface, the controller is arranged on the first surface, and the switch is arranged on the second surface.

10. The smart bracelet of the claim 7, wherein the protecting housing defines an opening, and the controlling board comprises an interface aligned with the opening.

11. The smart bracelet of the claim 4, wherein the smart bracelet further comprises a flexible touching panel, the touching panel is arranged on the bending section and electrically connected with the controlling module.

12. The smart bracelet of the claim 11, wherein the first flexible circuit board is adjacent to the touching panel.

13. The smart bracelet of the claim 12, wherein the first flexible circuit board partially overlaps with the touching panel.

14. The smart bracelet of any one of the claims 1-6, wherein the smart bracelet further comprises a third flexible circuit board packaged by the protecting housing, and the third flexible circuit board is operated to electrically connect with the functional module and the controlling module.

15. The smart bracelet of any one of the claims 1-6, wherein the battery and the controlling module are correspondingly located on the two opposite sides of the functional module.

16. The smart bracelet of any one of the claims 1-6, wherein the battery is located between the functional module and the controlling module.

17. The smart bracelet of the claim 14, wherein the third flexible circuit board bypasses a bottom portion of the battery and is connected with the controlling module.

18. The smart bracelet of the claim 4, wherein the battery is electrically connected with the controlling module by a wire, the wire is parallel to the first flexible circuit board, and a length of the wire is greater than a length of the first flexible circuit board.

19. The smart bracelet of any one of the claims 1-6, wherein the protecting housing further comprises a transition section connected between the bending section and the non-bending section, and the transition section is configured to smoothly connect an outside surface of the bending section and an outside surface of the non-bending section.

20. The smart bracelet of any one of the claims 1-6, wherein the smart bracelet further comprises two magnets, the two magnets are correspondingly arranged at two opposite ends of the protecting housing and operated to attract each other when the smart bracelet is bent.
